# EUROPÄISCHE PATENTSCHRIFT

(11) **EP 1 469 226 B1**
(45) Veröffentlichungstag und Bekanntmachung des Hinweises auf die Patenterteilung: **08.02.2006**
(21) Anmeldenummer: 04007488.2
(22) Anmeldetag: 27.03.2004
(51) Int. Cl.: F16F 9/02

(54) **Längenverstellbare Gasfeder**
Lengthwise adjustable gas spring
Ressort à gaz réglable en longueur

(30) Priorität: 15.04.2003 DE 10317174
(43) Veröffentlichungstag der Anmeldung: 20.10.2004
(73) Patentinhaber: SUSPA Holding GmbH, 90518 Altdorf (DE)
(72) Erfinder: Knapp, Rainer, 92364 Deining (DE); Knaust, Holger, 92245 Kümmersbruck (DE); Wörnlein, Erich, 91227 Leinburg (DE)
(74) Vertreter: Rau, Albrecht

(56) Entgegenhaltungen:
- EP-A- 0 353 550
- DE-A- 1 505 360
- DE-A- 2 445 240
- DE-A- 4 000 865
- DE-U- 1 960 545
- DE-U- 6 944 199
- DE-U- 9 212 735
- GB-A- 565 630
- US-A- 4 867 460
- US-A1- 2002 152 790

## Beschreibung

Gasfedern sind in großer Zahl bekannt. Aus der EP 0 353 550 B1 (entspr. US-PS 4,949,941), welche als nächstliegender Stand der Technik angesehen wird, sind längenverstellbare Gasfedern bekannt, bei denen das Ventil im Kolben angeordnet ist und durch eine in der hohl ausgebildeten Kolbenstange angeordnete Ventil-Betätigungs-Stange betätigbar ist. Derartige Gasfedern weisen den Nachteil auf, dass die Kolbenstange bis zu einem fest vorbestimmten starren Endanschlag ausfahrbar ist. Dieser starre Endanschlag wird bei bestimmten Anwendungen, insbesondere solchen, bei denen die Kolbenstange auf Zug belastet ist, als ungenügend empfunden.

Aus der US 2002/0152790 A1 ist ein Dämpfer für eine mechanische Presse bekannt. Beim Betrieb der Presse wird auf den Dämpfer eine Druckkraft ausgeübt, sodass die Kolbestange eingeschoben wird. Nach einem Pressvorgang wird die Kolbenstange infolge des Innendrucks des Dämpfers wieder ausgefahren, wobei der Kolben gegen ein dämpfendes Pufferbauteil und ein steifes Haltebauteil anschlägt. Das Ausüben einer Zugkraft auf den Dämpfer ist nicht vorgesehen.

Aus der DE 40 00 865 A1 ist eine Gasfeder mit Zwischenarretierung bekannt. Durch das Verdrehen einer Steuerscheibe wird eine Öffnung beim Ausfahren der Kolbenstange wahlweise verschlossen oder offen gehalten, sodass die Kolbenstange entweder bis zu einer Zwischenarretierung oder vollständig ausfährt.

Die GB 565 630 offenbart einen Stoßdämpfer für ein Kraftfahrzeug. Zwischen dem Kolben und einem oberen Gehäuseende ist ein schwimmender Kolben angeordnet. Der schwimmende Kolben dient als Träger für mehrere Tellerfedern, die zwischen dem schwimmenden Kolben und dem Gehäuseende angeordnet sind. Die Tellerfedern wirken zum Druckausgleich in dem Stoßdämpfer und als Puffer beim Ausschieben der Kolbenstange.

Aus der US 4,867,460 ist eine hydraulische Hebevorrichtung mit einem Zylinder und einem Kolben bekannt. Der Kolben schlägt beim Ausfahren gegen einen axial verschiebbaren Zylinderring an. Der Zylinderring liegt gegen Federelemente an, die eine Dämpfung und eine verzögernde Kraft auf den Kolben ausüben.

Der Erfindung liegt die Aufgabe zu Grunde, den Stand der Technik derart weiterzubilden, dass bei einer freien Bewegung der Kolbenstange ein starrer Endanschlag vermieden und gleichzeitig bei einer wirkenden Zugkraft ein zusätzlicher Hub der Kolbenstange bereitgestellt wird.

Die Aufgabe wird durch die Merkmale des Anspruches 1 gelöst. Der Kern der Erfindung besteht darin, zwischen dem Kolben und dem offenen Ende des Gehäuses, durch das die Kolbenstange nach außen geführt wird, ein Feder-Element vorzusehen. Dieses hat den Vorteil, dass das Ausschieben der Kolbenstange nicht gegen einen starren Anschlag erfolgt und somit eine gewisse Dämpfung vorhanden ist. Darüber hinaus ist ein Ausziehen der Kolbenstange über den normalen Ausschub-Zustand hinaus möglich. Die Gasfeder erhält somit einen zusätzlichen Hub, der für bestimmte Anwendungen außerordentlich hilfreich ist.

Weitere Ausgestaltungen der Erfindung ergeben sich aus den Unteransprüchen.

Zusätzliche Merkmale und Einzelheiten der Erfindung ergeben sich aus der Beschreibung von vier Ausführungsbeispielen an Hand der Zeichnung. Es zeigen
- Fig. 1: eine Gasfeder gemäß dem ersten Ausführungsbeispiel im Längsschnitt,
- Fig. 2: einen Teil der Darstellung gemäß Fig. 1 in stark vergrößerter Darstellung,
- Fig. 3: eine Gasfeder gemäß dem zweiten Ausführungsbeispiel im Längsschnitt,
- Fig. 4: einen Teil der Darstellung gemäß Fig. 3 in stark vergrößerter Darstellung,
- Fig. 5: eine Gasfeder gemäß den dritten Ausführungsbeispiel im Längsschnitt,
- Fig. 6: einen Teil der Darstellung gemäß Fig. 5 in stark vergrößerter Darstellung,
- Fig. 7: eine Gasfeder gemäß dem vierten Ausführungsbeispiel im Längsschnitt und
- Fig. 8: einen Teil der Darstellung gemäß Fig. 7 in stark vergrößerter Darstellung.

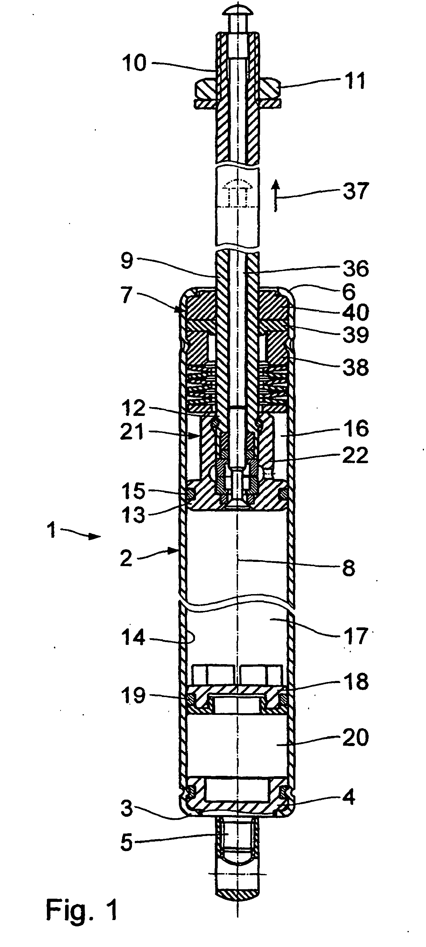

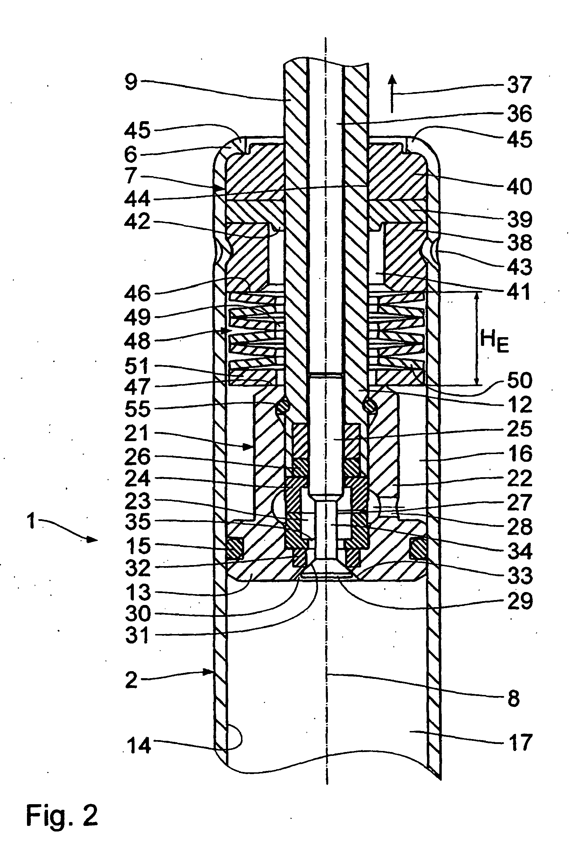

Im Folgenden wird unter Bezugnahme auf die Fig. 1 und 2 ein erstes Ausführungsbeispiel der Erfindung beschrieben. Eine längenverstellbare, starr blockierbare Gasfeder 1 weist ein im Wesentlichen zylindrisches, aus einem Rohr hergestelltes Gehäuse 2 auf, das an einem Ende 3 mittels eines Bodens 4 gasdicht verschlossen ist. An dem Boden 4 ist ein Befestigungs-Element 5 angebracht. Am anderen Ende 6 des Gehäuses 2 ist eine ringförmig ausgebildete Führungs- und Dichtungs-Einheit 7 flüssigkeitsdicht befestigt, die zur Führung und Abdichtung einer im Gehäuse 2 konzentrisch zu dessen Mittel-Längs-Achse 8 verschiebbar angeordneten Kolbenstange 9 dient. Am außerhalb des Gehäuses 2 befindlichen freien Ende 10 der Kolbenstange 9 ist ebenfalls ein Befestigungs-Element 11 vorgesehen.

Am im Gehäuse 2 befindlichen Ende 12 der Kolbenstange 9 ist ein Kolben 13 angebracht, der an der Innenwand 14 des Gehäuses 2 geführt ist und gegenüber dieser mittels einer Dichtung 15 flüssigkeitsdicht abgedichtet ist. Der Kolben 13 teilt den Innenraum des Gehäuses 2 in einen zwischen dem Kolben 13 und der Führungs- und Dichtungs-Einheit 7 befindlichen Teil-Gehäuseraum 16 und einen hiervon abgewandten Teil-Gehäuseraum 17. Der Teil-Gehäuseraum 17 wiederum wird durch einen Schiebekolben 18 begrenzt, der an der Innenwand 14 des Gehäuses 2 geführt verschiebbar und gegenüber dieser mittels einer Dichtung 19 gas- und flüssigkeitsdicht abgedichtet ist. Zwischen dem Schiebekolben 18 und dem Boden 4 wiederum ist eine Druckgas-Kammer 20 angeordnet, in der sich Gas unter Druck befindet. Die Teil-Gehäuseräume 16, 17 sind mit einer Flüssigkeit, beispielsweise Hydrauliköl, gefüllt. Im Kolben 13 ist ein Ventil 21 ausgebildet, mittels dessen die Teil-Gehäuseräume 16, 17 miteinander verbunden bzw. voneinander getrennt werden können. Es weist einen Ventilkörper 22 auf, der sich auf der der Dichtungs- und Führungs-Einheit 7 zugewandten Seite des Kolbens 13 befindet. In dem hohl ausgebildeten Ventilkörper 22 ist eine zweiteilig ausgebildete, einen Überströmraum 23 begrenzende Büchse 24 angeordnet, die von einem koaxial zur Achse 8 angeordneten und verschiebbaren Ventilstift 25 durchsetzt wird. Der Ventilstift 25 ist zwischen der Büchse 24 und der hohl ausgebildeten Kolbenstange 9 mittels einer Dichtung 26 nach außen abgedichtet. Der Überströmraum 23 ist mittels einer in der Büchse 24 ausgebildeten Drosselöffnung und einem im Ventilkörper 22 ausgebildeten Überströmkanal 28 mit dem Teil-Gehäuseraum 16 ständig verbunden. Der Ventilstift 25 weist an seinem zum Teil-Gehäuseraum 17 weisenden Ende einen Ventilteller 29 auf, der in einer Verbindungsöffnung 30 des Ventils 21 zum Teil-Gehäuseraum 17 angeordnet ist. Er liegt mit seiner der Büchse 24 zugewandten Dichtfläche 31 gegen eine Dichtung 32 an. Diese Dichtung 32 liegt wiederum gegen eine Anlagefläche 33 an. Der Durchmesser des Ventiltellers 29 ist kleiner als der Durchmesser der Verbindungsöffnung 30.

Der Ventilstift 25 weist im Bereich zwischen dem Überströmraum 23 und dem Ventilteller 29 einen verjüngten Abschnitt 34 auf, zwischen dem und den benachbarten Teilen, nämlich der Büchse 24 und der Dichtung 32, ein bis zum Ventilteller 29 führender ringförmiger Kanal 35 ausgebildet ist. In der hohl ausgebildeten Kolbenstange 9 ist eine entlang der Achse 8 verschiebbare, vom Ende 10 her durch Verschieben betätigbare Ventil-Betätigungs-Stange 36 angeordnet, die gegen den Ventilstift 25 anliegt. Die Ventil-Betätigungs-Stange 36 ist durch eine am Ende 10 der Kolbenstange 9 angebrachte, nicht dargestellte Betätigungs-Einrichtung betätigbar, d. h. entlang der Achse 8 verschiebbar und gegebenenfalls in verschiedenen Axialpositionen festlegbar. Die Kolbenstange 9 ist in axialer Richtung gegenüber dem Ventilkörper 22 durch einen Federring 55, der in entsprechenden Ausnehmungen zwischen dem Ventilkörper 22 und der Kolbenstange 9 aufgenommen ist, festgelegt.

Die Führungs- und Dichtungs-Einheit 7 weist entlang der parallel zur Achse 8 verlaufenden Ausschub-Richtung 37 hintereinander ein ringzylindrisches Zwischenstück 38, eine an dem Zwischenstück 38 anliegende ringförmige Dichtung 39 sowie ein an der Dichtung 39 anliegendes ringförmiges Abschluss-Stück 40 auf. Zwischen dem Zwischenstück 38 und der Kolbenstange 9 ist ein Ringspalt 41 gebildet, in den eine mit der Dichtung 39 einteilig ausgebildete ringförmige Dichtungs-Lippe 42 zum Teil hineinragt. Das Zwischenstück 38 ist über mehrere über den Umfang des Gehäuses 2 verteilte kugelkalottenförmige Eindrückungen 43 in axialer Richtung gegenüber dem Gehäuse 2 festgelegt. Die Dichtung 39 liegt dichtend an der Kolbenstange 9 sowie der Innenwand 14 an und dichtet somit den Teil-Gehäuseraum 16 gegenüber der Umgebung ab. Das Abschluss-Stück 40 weist eine koaxial zur Achse 8 angeordnete Bohrung 44 auf, in der die Kolbenstange 9 im Wesentlichen spielfrei geführt ist. Das Abschluss-Stück 40 ist in Richtung 37 durch eine Umbördelung 45 des Gehäuses 2 im Bereich des Endes 6 festgelegt.

Zwischen dem dem Teil-Gehäuseraum 16 zugewandten, eine ringförmige Anlagefläche 46 bildenden Ende des Zwischenstücks 38 und dem in Richtung 37 weisenden, eine ringförmige Anlagefläche 47 bildenden Ende des Ventilkörpers 22 ist ein Feder-Element 48 angeordnet. Das Feder-Element 48 umgibt die Kolbenstange 9 ringförmig und weist eine zentrale Bohrung 49 auf, deren Durchmesser größer ist als der Außendurchmesser der Kolbenstange 9. Der Durchmesser der Bohrung 49 ist so groß, d. h. mit einem entsprechenden Spiel gewählt, dass auch bei einer Schrägstellung des Feder-Elements 48 dieses an der Kolbenstange 9 nicht reibt und nicht zu Kratzern führt, die die Abdichtung des Teil-Gehäuseraums 16 beeinträchtigen könnten. Der Außendurchmesser des Feder-Elements 48 ist derart gewählt, dass zwischen diesem und der Innenwand 14 ein ausreichendes Spiel besteht und das Feder-Element 48 entlang der Achse 8 verschiebbar ist. Das Feder-Element 48 besteht aus mehreren fluchtend aufeinanderliegenden, vorzugsweise miteinander verbundenen Tellerfedern 50. Im vorliegenden Fall sind sechs Tellerfedern 50 mit abwechselnder Durchbiegung aufeinander angeordnet. Es können auch beliebige andere Anordnungen von Tellerfedern verwendet werden. Durch die Hintereinanderanordnung verschiedener Typen und Orientierung von Tellerfedern ist es möglich, je nach Wunsch lineare, progressive oder degressive Federkraft-Federweg-Kennlinien einzustellen. Der besondere Vorteil der Verwendung von Tellerfedern besteht darin, dass diese über einen sehr kurzen Weg eine große Federkraft aufbauen können. Der durch das Feder-Element 48 bedingte zusätzliche Hub und die für das Zusammendrücken erforderliche Kraft sind durch die Anzahl der Federelemente und Stärke der Federelemente frei einstellbar. Das im vorliegenden Fall verwendete Feder-Element 48 weist beispielsweise einen Gesamthub - zwischen vollständig entspanntem Zustand und vollständig zusammengedrücktem Zustand gerechnet - von 3,6 mm auf. In dem vollständig zusammengedrückten Zustand beträgt die erzeugte Gegenkraft circa 1500 N. Es ist möglich, das Feder-Element 48 anstelle von Tellerfedern 50 aus einer Druckfeder oder einem elastischen Polymerblock beispielsweise aus Gummi oder Polyurethan zu bilden. Zwischen der in Fig. 2 dargestellten untersten Tellerfeder 50 und der Anlagefläche 47 befindet sich eine ringförmige Scheibe 51, gegenüber der der unterste Tellerring 50 abgestützt ist und die sich ihrerseits gegenüber der Anlagefläche 47 abstützt. Durch die Scheibe 51 wird eine möglichst günstige Kraftübertragung von der untersten Tellerfeder 50 auf die Anlagefläche 47 geringeren Außendurchmessers ennöglicht.

Im Folgenden werden die Grundfunktionen der Gasfeder 1 sowie die durch das Feder-Element 48 hinzukommenden Eigenschaften im Detail erläutert. Wenn die Stange 36 gegenüber der in Fig. 2 dargestellten Position entgegen der Richtung 37 in die Kolbenstange 9 eingeschoben wird, dann wird der Ventilstift 25 aus der in Fig. 2 dargestellten Schließstellung in Richtung zum Teil-Gehäuseraum 17 in eine Ventil-Öffnungs-Stellung verschoben, wodurch die Dichtfläche 31 des Ventiltellers 29 von der Dichtung 32 abhebt, sodass der Teil-Gehäuseraum 16 über den Überströmkanal 28, die Drosselöffnung 27, den Überströmraum 23, den Kanal 35 und die Verbindungsöffnung 30 mit dem Teil-Gehäuseraum 17 verbunden ist, sodass beim Einschieben der Kolbenstange 9 in das Gehäuse 2 Hydrauliköl vom Teil-Gehäuseraum 17 zum Teil-Gehäuseraum 16 fließen kann. Dieses Einschieben erfolgt gegen die vom Druckgas in der Druckgas-Kammer 20 erzeugte Gegenkraft, wobei bei dieser Bewegung der Schiebekolben 18 unter weiterem Zusammendrücken des Druckgases in Richtung zum Boden 4 hin verschoben wird. Wenn dagegen bei geöffnetem Ventil 21 die Kolbenstange 9 entlastet ist, wird sie auf Grund der vom Druckgas ausgeübten Kraft aus dem Gehäuse 2 ausgeschoben; der Schiebekolben 18 wird vom Boden 4 wegbewegt. Die Gasfeder 1 ist also eine Druck-Gasfeder. Wenn die Betätigungs-Stange 36 losgelassen wird, dann wird der Ventilstift 25 wieder auf Grund des im Teil-Gehäuseraumes 17 wirkenden Drucks in seine Schließstellung gedrückt. Der Kolben 13 mit der Kolbenstange 9 ist dann relativ zum Gehäuse 2 mit diesem hydraulisch starr verriegelt.

Das Feder-Element 48 weist im entspannten Zustand eine axiale Höhe H_{E} auf. Solange der axiale Abstand zwischen der Anlagefläche 47 und der Anlagefläche 46 größer als H_{E} ist, kann sich das Feder-Element 48 in axialer Richtung in dem Teil-Gehäuseraum 16 frei bewegen. Befindet sich das Ventil 21 in der Öffnungs-Stellung, so wird die Kolbenstange 9 in Richtung 37 nach außen geschoben, bis der Abstand zwischen den Anlageflächen 46 und 47 gleich H_{E} ist. Wirkt zwischen den Befestigungs-Elementen 5 und 11 keine äußere Kraft, so wird die Kolbenstange 9 durch den Gasdruck in der Druckgas-Kammer 20 noch geringfügig weiter ausgeschoben und hierdurch das Feder-Element 48 geringfügig zusammengedrückt. In der bevorzugten Ausführungsform ist die für das Zusammendrücken des Feder-Elementes 48 erforderliche Kraft größer, gegebenenfalls auch sehr viel größer, als die von der Druckgas-Kammer 20 ausgeübte Kraft, sodass bei einem freien Ausschub der Kolbenstange 9 das Feder-Element 48 nur geringfügig zusammengedrückt wird. Das Feder-Element 48 bewirkt somit eine geringfügige Dämpfung der freien Ausschubbewegung der Kolbenstange 9.

Es gibt Anwendungen für längenverstellbare, blockierbare Gasfedern, bei denen zwischen den Befestigungs-Elementen 5 und 11 Zugkräfte in Richtung 37 auf die Kolbenstange 9 wirken. Wirkt eine solche Zugkraft auf die Kolbenstange 9 und befindet sich das Ventil 21 in Öffnungs-Stellung, so wird das Feder-Element 48 gegen eine entsprechende Feder-Gegenkraft zusammengedrückt und das Druckmedium von dem Teil-Gehäuseraum 16 in den Teil-Gehäuseraum 17 befördert. Die Gasfeder 1 verfügt somit auch im ausgeschobenen Zustand über einen zusätzlichen Hub entsprechend der Höhe, in die das Feder-Element 48 in axialer Richtung zusammengedrückt werden kann. Entsprechend der für das Feder-Element 48 gewählten Federkraft-Federweg-Kennlinie besitzt die Gasfeder 1 im Bereich des in Fig. 2 dargestellten Ausschubs der Kolbenstange 9 eine zusätzliche Federung, die dann relevant ist, wenn auf die Kolbenstange 9 eine Auszugskraft in Richtung 37 wirkt. Solange die Flüssigkeitssäule in den Gehäuseräumen 16, 17 nicht abreißt, erfolgt die Federung durch das Feder-Element 48 nur dann, wenn sich das Ventil 21 in Öffnungs-Stellung befindet. Wird nach dem Zusammendrücken des Feder-Elements 48 das Ventil 21 geschlossen, so wird die Kolbenstange 9 wieder ein Stück eingeschoben, wodurch sich das Feder-Element 48 im Wesentlichen entspannt und der Schiebekolben 18 in Richtung auf den Boden 4 verschoben wird. Die Gasfeder 1 besitzt somit nach dem Herausziehen der Kolbenstange 9 in Richtung 37 nach dem Wegfall der entsprechenden Zugkraft eine sanfte Rückstellcharakteristik im Wesentlichen wieder in die in Fig. 2 dargestellte Position. Die Rückstellung hängt von dem Verhältnis der Kraft-Weg-Kennlinien des Feder-Elements 48 und der Druckgas-Kammer 20 ab. Der zusätzliche Hub der Gasfeder 1 ist somit durch die Ventil-Betätigungs-Einrichtung zuschaltbar und nur im Bereich der Endposition der Kolbenstange aktiv.

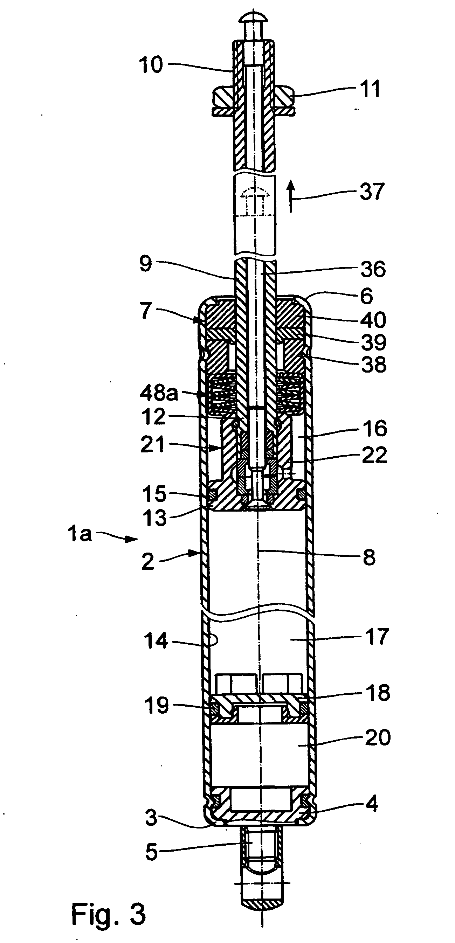

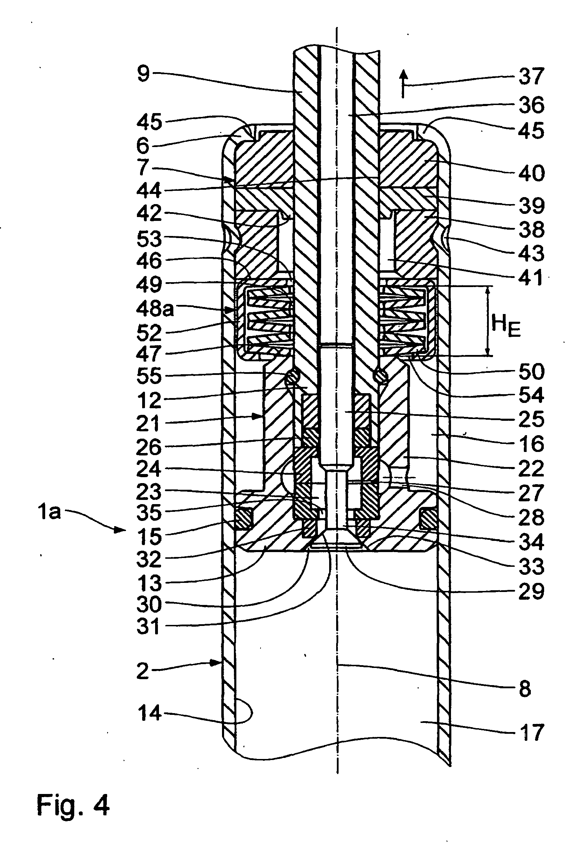

Im Folgenden wird unter Bezugnahme auf die Fig. 3 und 4 ein zweites Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass das Feder-Element 48a durch eine ringförmige Umkapselung 52 in axialer Richtung zusammengehalten wird. Die Umkapselung 52 weist am in Richtung 37 liegenden Ende eine Öffnung 53 auf, deren Innendurchmesser geringfügig größer ist als der Durchmesser der Bohrung 49. Am entgegen der Richtung 37 liegenden Ende weist die Umkapselung 52 eine Öffnung 54 auf, deren Durchmesser so gewählt ist, dass ein ausreichender Abstand zum in Richtung 37 weisenden Ende des Ventilkörpers 22 gewahrt bleibt und ein Zusammenhalt der Tellerfedern 50 dennoch gewahrt ist. Der Durchmesser der Öffnung 54 ist geringfügig größer als der Außendurchmesser des Ventilkörpers 22, sodass dieser in die Umkapselung 52 eingeschoben werden kann und dadurch die Tellerfedern 50 zusammengedrückt werden können. Bei dem zweiten Ausführungsbeispiel liegt die untere Tellerfeder 50 unmittelbar an der Anlagefläche 47 an, ohne dass eine Scheibe 51 erforderlich ist. Die Umkapselung 52 hat den Vorteil, dass eine Schrägstellung der einzelnen Tellerfedern 50 relativ zueinander verhindert wird, die sonst unter Umständen zu Schrammen an der Kolbenstange 9 führen könnte. Darüber hinaus ist es möglich, das Feder-Element 48a durch die Umkapselung 52 vorzuspannen, was für die Erreichung bestimmter Federkraft-Federweg-Kennlinien erforderlich ist.

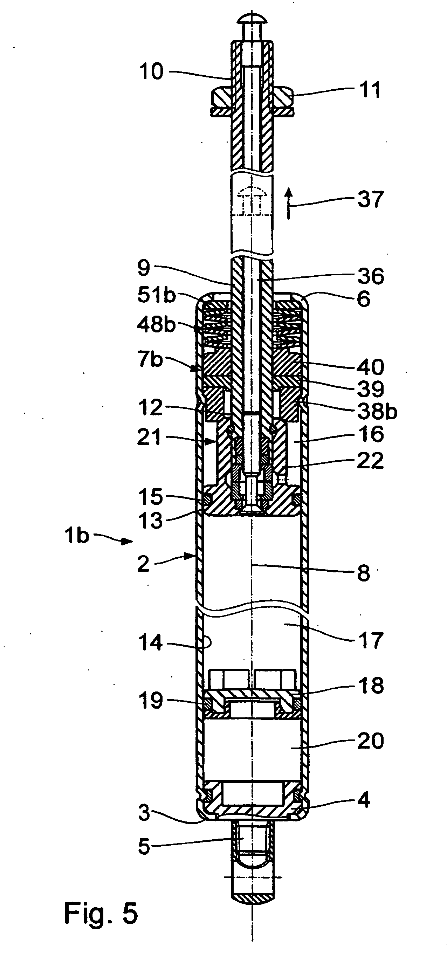

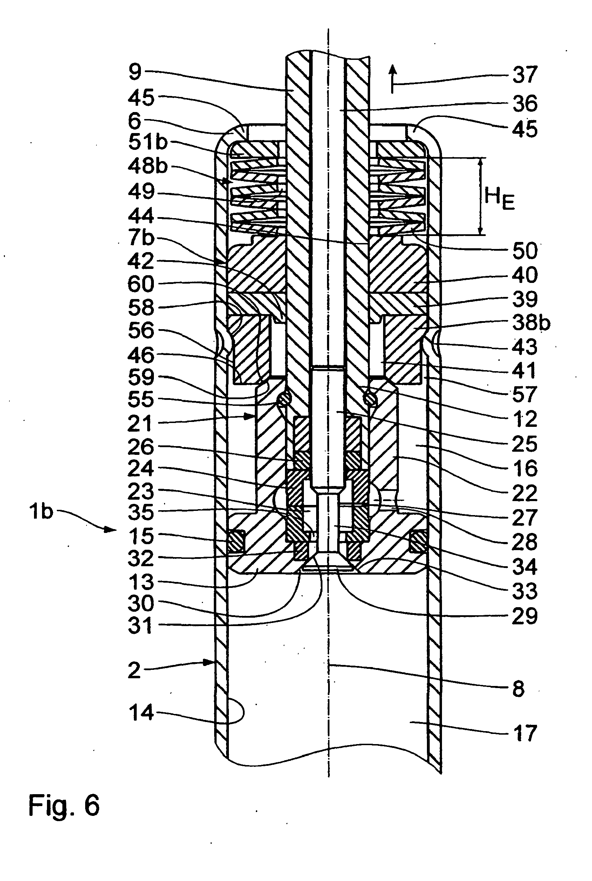

Im Folgenden wird unter Bezugnahme auf die Fig. 5 und 6 ein drittes Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Bei dem dritten Ausführungsbeispiel ist das Feder-Element 48b außerhalb des Teil-Gehäuseraumes 16 zwischen dem in Richtung 37 weisenden Ende des Abschluss-Stückes 40 und der Umbördelung 45 des Gehäuses 2 angeordnet. Das Paket von Tellerfedern 50 weist dieselbe Anordnung auf, wie die Tellerfedern 50 in der Umkapselung 52 beim zweiten Ausführungsbeispiel. Das Abschluss-Stück 40 und die Dichtung 39 weisen denselben Aufbau auf wie bei dem ersten Ausführungsbeispiel. Das Zwischenstück 38b unterscheidet sich insofern, als es über einen Teil seiner axialen Länge beginnend von dem Ende im Bereich der Anlagefläche 46 zwischen der Innenwand 14 und dem Außenumfang 56 des Zwischenstückes 38b einen Ringspalt 57 bildet. Der Ringspalt 57 erstreckt sich in Richtung 37 über ungefähr zwei Drittel der axialen Länge des Zwischenstücks 38 b und endet in einer sich konisch erweiternden Anlagefläche 58, an der die Innenseiten der Eindrückungen 43 zur Anlage kommen, wie dies in Fig. 6 dargestellt ist. Durch den Ringspalt 57 ist das Zwischenstück 38b und damit die gesamte Führungs- und Dichtungs-Einheit 7b von der in Fig. 6 dargestellten Position in Richtung 37 verschiebbar. Durch das Zusammenwirken der Anlagefläche 58 mit den Eindrückungen 43 ist eine Verschiebung des Zwischenstücks 38b entgegen der Richtung 37 über die in Fig. 6 dargestellte Position nicht möglich. Der Ventilkörper 22 weist im Bereich seines in Richtung 37 weisenden Endes eine ringförmige, sich konisch verjüngende Anlagefläche 59 auf, die mit einer entsprechenden, sich ebenfalls konisch verjüngenden Anlagefläche 60 am entgegen der Richtung 37 liegenden Ende des Zwischenstücks 38b zusammenwirkt. Die obere Tellerfeder 50 ist über eine Scheibe 51b gegenüber der Umbördelung 45 des Gehäuses 2 abgestützt.

Die Grundfunktion der Gasfeder 1b entspricht der gemäß dem ersten Ausführungsbeispiel, d. h. eine Verschiebung der Kolbenstange 9 ist nur möglich, wenn sich das Ventil 21 in Öffnungs-Stellung befindet. Der zentrale Unterschied gegenüber den ersten beiden Ausführungsbeispielen besteht darin, dass das Feder-Element 48b auch in beliebigen Zwischenstellungen des Kolbens 13, d. h. auch dann, wenn dieser sich nicht im in Fig. 6 dargestellten, ausgefahrenen Zustand befindet, eine Dämpfung bei einer Belastung auf Zug entfaltet. Für die Dämpfung einer Belastung auf Zug ist es auch nicht erforderlich, dass sich das Ventil 21 in der Öffnungsstellung befindet. Wird die in den Fig. 5 und 6 dargestellte Gasfeder 1b bei geschlossenem Ventil 21 auf Zug belastet, so wird das in den beiden Teil-Gehäuseräumen 16 und 17 befindliche Druckmedium nach außen geschoben, gefolgt von dem Schiebekolben 18. Das Druckmedium in dem Teil-Gehäuseräumen 16, 17 bewirkt eine Verschiebung der Führungs- und Dichtungs-Einheit 7b in Richtung 37, wodurch das Feder-Element 48b zusammengedrückt wird und die Auszugsbewegung der Kolbenstange 9 eine Dämpfung erfährt. Sobald die nach außen gerichtete Zugkraft auf die Kolbenstange 9 wegfällt, entspannt sich das Feder-Element 48b wieder und die Kolbenstange 9 wird um den entsprechenden Hub wieder nach innen geschoben. Der zusätzliche Hub der Gasfeder 1b ist im Gegensatz zur Gasfeder gemäß dem ersten Ausführungsbeispiel in jeder Position der Kolbenstange 9 aktiv.

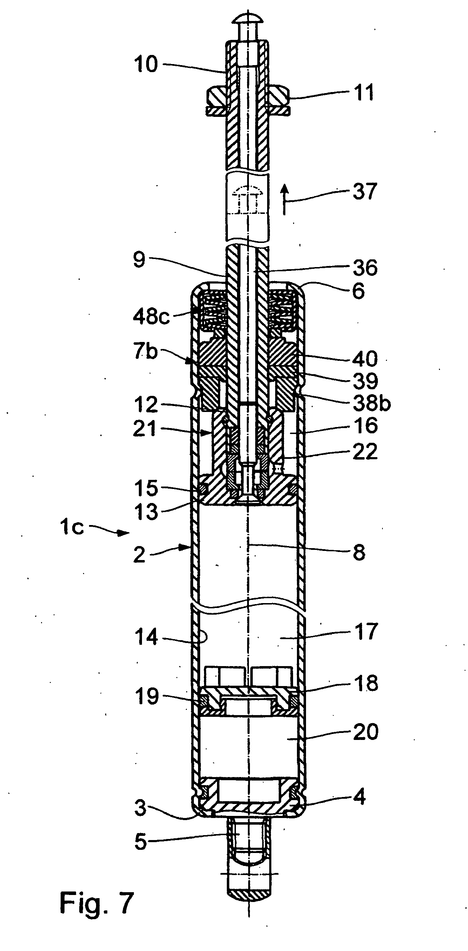

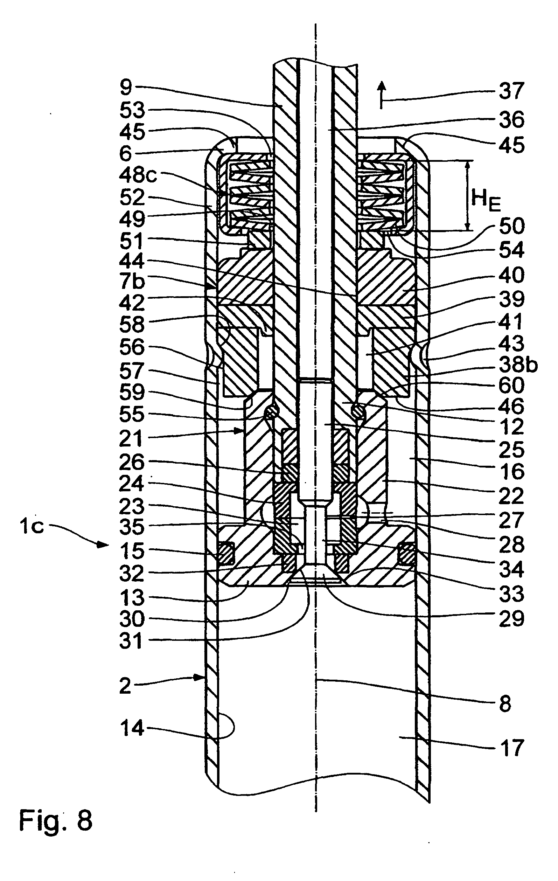

Im Folgenden wird unter Bezugnahme auf die Fig. 7 und 8 ein viertes Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c. Der wesentliche Unterschied des vierten Ausführungsbeispiels gegenüber dem dritten Ausführungsbeispiel besteht darin, dass, wie beim zweiten Ausführungsbeispiel, die Tellerfedern 50 des Feder-Elements 48c durch eine Umkapselung 52 zusammengehalten sind. Die Vorteile der Umkapselung sind dieselben wie bei dem zweiten Ausführungsbeispiel. Ansonsten entspricht die Funktion der Gasfeder 1c der der Gasfeder 1b.

## Patentansprüche

1. Längenverstellbare Gasfeder
a. mit einem, mit einem flüssigen Druck-Medium gefüllten, eine Mittel-Längs-Achse (8) aufweisenden Gehäuse (2),
b. mit einer das Gehäuse (2) an einem ersten Gehäuse-Ende (6) abschließenden Führungs- und Dichtungs-Einheit (7; 7b),
c. mit einer abgedichtet durch die Führungs- und Dichtungs-Einheit (7; 7b) aus dem ersten Gehäuse-Ende (6) herausgeführten, ein äußeres Kolbenstangen-Ende (10) aufweisenden Kolbenstange (9),
d. mit einem an dem Kolbenstangen-Ende (10) angeordneten ersten Befestigungs-Element (11),
e. mit einem an einem verschlossenen Ende (3) des Gehäuses (2) angeordneten zweiten Befestigungs-Element (5),
f. mit einem, mit der Kolbenstange (9) verbundenen, im Gehäuse (2) abgedichtet geführten Kolben (13),
g. mit einem zwischen dem Kolben (13) und der Führungs- und Dichtungs-Einheit (7; 7b) gebildeten ersten Teil-Gehäuseraum (16),
h. mit einem durch den Kolben (13) begrenzten, dem ersten Teilgehäuseraum (16) abgewandten zweiten Teil-Gehäuseraum (17), und
i. mit einem im Bereich des Kolbens (13) angeordneten Ventil (21) zum Miteinander-Verbinden der Teil-Gehäuseräume (16, 17),
i. wobei das Ventil (21) einen entlang der Mittel-Längs-Achse (8) verschiebbaren Ventilstift (25) zur Betätigung des Ventils (21) von außerhalb des Gehäuses (2) aufweist,
j. **dadurch gekennzeichnet, dass** mindestens ein Feder-Element (48; 48a; 48b; 48c) vorgesehen ist,
i. das zwischen dem Kolben (13) und dem ersten Gehäuse-Ende (6) angeordnet ist,
ii. das die Kolbenstange (9) umgibt,
iii. das zumindest auf einer Seite gegenüber der Führungs- und Dichtungs-Einheit (7; 7b) abgestützt ist, und
iv. das dem Ausschub der Kolbenstange (9) in einer Ausschub-Richtung (37) zumindest entlang eines Teiles des Ausschubweges federnd entgegenwirkt, wobei das mindestens eine Feder-Element (48; 48a; 48b; 48c) derart ausgebildet ist, dass bei geöffnetem Ventil (21) ohne eine zwischen den Befestigungs-Elementen (5, 11) wirkende Zugkraft dieses nur geringfügig zusammengedrückt ist und bei geöffnetem Ventil (21) und einer zwischen den Befestigungs-Elementen (5, 11) wirkenden Zugkraft dieses in der Ausschub-Richtung (37) zusätzlich zusammendrückbar ist.

2. Gasfeder gemäß Anspruch 1, **dadurch gekennzeichnet, dass** das mindestens eine Feder-Element (48; 48a; 48b; 48c) mindestens eine Tellerfeder (50) aufweist.

3. Gasfeder gemäß Anspruch 2, **dadurch gekennzeichnet, dass** das mindestens eine Feder-Element (48; 48a; 48b; 48c) ein Paket von Tellerfedern (50) aufweist.

4. Gasfeder gemäß Anspruch 3, **dadurch gekennzeichnet, dass** das Paket von Tellerfedern (50) durch eine Umkapselung (52) zusammengehalten ist.

5. Gasfeder gemäß Anspruch 4, **dadurch gekennzeichnet, dass** das mindestens eine Feder-Element (48; 48a; 48b; 48c) in dem ersten Teil-Gehäuseraum (16) angeordnet ist.

6. Gasfeder gemäß einem der Ansprüche 1 bis 4, **dadurch gekennzeichnet, dass** die Führungs- und Dichtungs-Einheit (7b) in dem Gehäuse (2) verschiebbar geführt ist.

7. Gasfeder gemäß Anspruch 6, **dadurch gekennzeichnet, dass** die Verschiebbarkeit der Führungs- und Dichtungs-Einheit (7b) entgegen der Ausschub-Richtung (37) durch einen Anschlag (43) begrenzt ist.

8. Gasfeder gemäß einem der Ansprüche 6 oder 7, **dadurch gekennzeichnet, dass** das mindestens eine Feder-Element (48b; 48c) entgegen der Ausschub-Richtung (37) gegenüber der Führungs- und Dichtungs-Einheit (7b) abgestützt ist.

9. Gasfeder gemäß einem der vorangehenden Ansprüche, **dadurch gekennzeichnet, dass** zwischen dem zweiten Teil-Gehäuseraum (17) und dem dem ersten Gehäuse-Ende (6) gegenüberliegenden, verschlossenen zweiten Gehäuse-Ende (3) ein Kraftspeicher, insbesondere ein mit einem Gas gefüllter Ausgleichs-Raum (20), vorgesehen ist.

## Claims

1. An adjustable length gas spring, comprising
a. a casing (2) which has a central longitudinal axis (8) and is filled with a pressure fluid;
b. a guide and seal unit (7; 7b) which closes the casing (2) at a first end (6) thereof;
c. a piston rod (9) which has an outer end (10) and is extended through, and sealed towards, the guide and seal unit (7; 7b) out of the first end (6) of the casing (2);
d. a first fastening elment (11) mounted on the outer end (10);
e. a second fastening element (5) mounted on a closed second end (3) of the casing (2);
f. a piston (13) which is guided in, and sealed towards, the casing (2) and connected with the piston rod (9);
g. a first sectional casing chamber (16) which is formed between the piston (13) and the guide and seal unit (7; 7b);
h. a second sectional casing chamber (17) which is defined by the piston (13) and faces away from the first sectional casing chamber (16); and
i. a valve (21) which is disposed in a vicinity of the piston (13) for interconnection of the sectional casing chambers (16, 17),
i. the valve (21) having a valve pin (25), which is displaceable along the central longitudinal axis (8), for actuation of the valve (21) from outside the casing (2);
j. **characterized in that** at least one spring element (48; 48a; 48b; 48c), is provided
i. which is disposed between the piston (13) and the first end (6) of the casing (2),
ii. which encircles the piston rod (9),
iii. which supports itself on a side opposite the guide and seal unit (7; 7b), and
iv. which, in a direction of extension (37), springily counteracts an extension of the piston rod (9) for at least part of a length of extension, wherein the at least one spring element (48; 48a; 48b; 48c) is designed such that, when the valve (21) is opened and without any tensile force acting between the fastening elements (5, 11), it is compressed only slightly and, when the valve (21) is opened and a tensile force acting between the fastening elements (5, 11), it is additionally compressible in the direction of extension (37).

2. A gas spring according to claim 1, **characterized in that** the at least one spring element (48; 48a; 48b; 48c) comprises at least one saucer spring (50).

3. A gas spring according to claim 2, **characterized in that** the at least one spring element (48; 48a; 48b; 48c) comprises an assembly of saucer springs (50).

4. A gas spring according to claim 3, **characterized in that** the assembly of saucer springs (50) is confined by an encapsulation (52).

5. A gas spring according to claim 4, **characterized in that** the at least one spring element (48; 48a; 48b; 48c) is disposed in the first sectional casing chamber (16).

6. A gas spring according to one of claims 1 to 4, **characterized in that** the guide and seal unit (7b) is displaceable in the casing (2).

7. A gas spring according to claim 6, **characterized in that** displaceability of the guide and seal unit (7b) counter to the direction of extension (37) is defined by a stop (43).

8. A gas spring according to one of claims 6 or 7, **characterized in that** the at least one spring element (48b; 48c) is supported towards the guide and seal unit (7b) counter to the direction of extension (37).

9. A gas spring according to one of the preceding claims, **characterized in that** an energy accumulator, in particular a gas-filled compensation chamber (20), is provided between the second sectional casing chamber (17) and the closed second end (3), opposite the first end (6), of the casing (2).

## Revendications

1. Ressort à gaz réglable en longueur
a. doté d'un boîtier (2) rempli d'un milieu sous pression liquide, comprenant un axe longitudinal médian (8),
b. doté d'une unité de guidage et d'étanchéification (7 ; 7b) fermant le boîtier (2) sur une première extrémité de boîtier (6),
c. doté d'une tige de piston (9), guidée de manière étanche à l'extérieur de la première extrémité de boîtier (6) par l'unité de guidage et d'étanchéification (7 ; 7b), comprenant une extrémité de tige de piston extérieure (10),
d. doté d'un premier élément de fixation (11) disposé sur l'extrémité de tige de piston (10),
e. doté d'un second élément de fixation (5) disposé sur une extrémité fermée (3) du boîtier (2),
f. doté d'un piston (13) relié à la tige de piston (9), guidé de façon étanche dans le boîtier (2),
g. doté d'une première chambre partielle de boîtier (16) formée entre le piston (13) et l'unité de guidage et d'étanchéification (7 ; 7b),
h. doté d'une seconde chambre partielle de boîtier (17) délimitée par le piston (13), opposée à la première chambre partielle de boîtier (16), et
i. doté d'une soupape (21) disposée dans la zone du piston (13), destinée à relier l'une à l'autre les chambres partielles de boîtier (16, 17),
i. la soupape (21) comprenant une tige de soupape (25) mobile le long de l'axe longitudinal médian (8), destinée à actionner la soupape (21) depuis l'extérieur du boîtier (2),
j. **caractérisé en ce qu'**au moins un élément formant ressort (48 ; 48a ; 48b ; 48c) est prévu,
i. qui est disposé entre le piston (13) et la première extrémité de boîtier (6),
ii. qui entoure la tige de piston (9),
iii. qui s'appuie au moins sur un côté contre l'unité de guidage et d'étanchéification (7 ; 7b), et
iv. qui réagit de manière élastique à la poussée vers l'extérieur de la tige de piston (9) dans une direction de poussée vers l'extérieur (37) au moins le long d'une partie du trajet de poussée vers l'extérieur, un des éléments formant ressort (48 ; 48a ; 48b ; 48c) étant conçu de telle sorte que lorsque la soupape (21) est ouverte, sans force de traction agissant entre les éléments de fixation (5, 11), ledit élément n'est que légèrement comprimé et lorsque la soupape (21) est ouverte, et qu'une force de traction agit entre les éléments de fixation (5, 11), ledit élément formant ressort peut être comprimé en plus dans la direction de poussée vers l'extérieur (37).

2. Ressort à gaz selon la revendication 1, **caractérisé en ce qu'**au moins un élément formant ressort (48 ; 48a ; 48b ; 48c) comprend au moins une rondelle Belleville (50).

3. Ressort à gaz selon la revendication 2, **caractérisé en ce qu'**un des éléments formant ressort (48 ; 48a ; 48b ; 48c) comprend un paquet de rondelles Belleville (50).

4. Ressort à gaz selon la revendication 3, **caractérisé en ce que** le paquet de rondelles Belleville (50) est maintenu par un blindage (52).

5. Ressort à gaz selon la revendication 4, **caractérisé en ce qu'**un des éléments formant ressort (48 ; 48a ; 48b ; 48c) est disposé dans la première chambre partielle de boîtier (16).

6. Ressort à gaz selon l'une quelconque des revendications 1 à 4, **caractérisé en ce que** l'unité de guidage et d'étanchéification (7b) est guidée de façon mobile dans le boîtier (2).

7. Ressort à gaz selon la revendication 6, **caractérisé en ce que** la mobilité de l'unité de guidage et d'étanchéification (7b) à l'opposé de la direction de poussée vers l'extérieur (37) est limitée par une butée (43).

8. Ressort à gaz selon l'une quelconque des revendications 6 ou 7, **caractérisé en ce qu'**un des éléments formant ressort (48b ; 48c) s'appuie à l'opposé de la direction de poussée vers l'extérieur (37) contre l'unité de guidage et d'étanchéification (7b).

9. Ressort à gaz selon l'une quelconque des revendications précédentes, **caractérisé en ce qu'**un accumulateur d'énergie, notamment une chambre de compensation (20) remplie d'un gaz, est prévu entre la seconde chambre partielle de boîtier (17) et la seconde extrémité de boîtier (3) fermée, opposée à la première extrémité de boîtier (6).
